Europäisches Patentamt

European Patent Office

Office européen des brevets

(19)

(11) Publication number: **0 317 363 B1**

# EUROPEAN PATENT SPECIFICATION

(12)

(45) Date of publication of patent specification: **13.04.94**

(51) Int. Cl.⁵: **G02B 13/14**, G02B 1/00, G02B 1/02

(21) Application number: **88310974.6**

(22) Date of filing: **21.11.88**

(54) **Wide band color correcting infra-red lens system.**

(30) Priority: **19.11.87 US 122953**

(43) Date of publication of application:
**24.05.89 Bulletin 89/21**

(45) Publication of the grant of the patent:
**13.04.94 Bulletin 94/15**

(84) Designated Contracting States:
**DE FR GB**

(56) References cited:
EP-A- 0 171 903
DE-A- 1 621 002
DE-A- 3 008 343

**OPTICAL ENGINEERING, vol. 23, no. 2, March-April 1984, pages 111-116, Bellingham, Washington, USA ; T.H. JAMIESON : "Ultrawide waveband optics".**

**JOURNAL OF OPTICS, vol. 15, no. 5, September-October 1984, pages 351-356, Paris, FR ; B. DUBOIS et al. : "Les matériaux vitreux pour l'optique infrarouge".**

(73) Proprietor: **TEXAS INSTRUMENTS INCORPORATED**
**13500 North Central Expressway**
**Dallas Texas 75265(US)**

(72) Inventor: **Cooper, Erwin E.**
**1510 Northridge**
**Carrollton Texas(US)**

(74) Representative: **Abbott, David John et al**
**Abel & Imray**
**Northumberland House**
**303-306 High Holborn**
**London, WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

FIELD OF THE INVENTION

This invention relates to refractive lens systems and, more particularly, to an apochromatic lens systems suitable for operation through the entire 3 to 12 micron spectral band.

BACKGROUND

Imaging devices, search and track sensors and other types of optical devices which operate in the 3 - 12 micrometer spectral region employ either reflective or refractive objective lens systems. An advantage of reflective optics is that wide spectral band operation is achievable. However, reflective optical systems have several undesirable features such as, for example, limited field of view and large physical size. In addition, central obscurations limits the diffraction modulation transfer function (MTF).

In the past refractive lens systems operating in the 3 - 12 micrometer band have been designed for limited ranges, e.g., either the 3 - 5 or the 8 - 12 micrometer atmospheric windows. This is because the refractive indices of component lens materials vary significantly between the two atmospheric windows. For example, germanium, a common lens material for the 8 - 12 micrometer wavelengths, operates like a "crown" in this portion of the spectrum while exhibiting characteristics of a "flint" in the 3 - 5 micrometer region. Generally, the prior art has avoided dual range refractive optics because apochromatic systems designed for operation in one window have exhibited intolerable chromatic aberrations in the other window.

The spectral sensitivities of infrared detectors and focal plane imaging devices are generally greater than the operating ranges of available refractive lens systems. This increased spectral sensitivity can be utilized at short ranges or high altitudes where atmospheric absorption is not a problem, but such applications have required use of reflective optics thereby imposing the above-mentioned limitations in wide band systems. It would be advantageous to provide a refractive lens system which is not limited to small bandwidths within the 3 - 13 micrometer range.

In DE-A-3,008,343 there are described triplet lenses for infra-red radiation that are effective in the wavelength range of 8 to 12 $\mu$m using elements of germanium, TI 1173, and arsenic trisulphide.

In Optical Engineering, Vol.23, No.2, March-April 1984, pages 111-116, there is a paper entitled "Ultrawide Waveband Optics" by T. H. Jamieson which discusses the design of lens systems for use over the extended waveband from about 0.4 $\mu$m to 12 $\mu$m. Materials and coatings for triplet lenses are suggested many of which include at least one element of an alkali metal halide. One proposal includes elements of zinc sulphide, KRS5 (an insoluble crystalline halide), and germanium (not transparent to visible light).

**SUMMARY OF THE INVENTION**

It is therefore desirable to form a refractive lens system providing improved color correction in the 3 -13 micrometer range.

According to the present invention there is provided an optical system including an infrared refractive lens triplet having color correcting properties for radiation ranging from 3 to 13 micrometers, said triplet comprising:

a first lens formed of glass with a dispersion V lying in the range 40 to 46,

$$V = (N_D - 1)/(N_{13} - N_3),$$

wherein for said first lens:

$N_D$ is the refractive index at 8 micrometers,
$N_{13}$ is the refractive index at 13 micrometers, and
$N_3$ is the refractive index at 3 micrometers;
a second lens comprising germanium; and
a third lens formed of a chalcogenide of zinc, said triplet of lenses being capable of simultaneously focusing radiation in the 3 to 12 or 3,5 to 13 micrometer range in a single focal plane.

An object of the invention is to provide a lens system which includes sufficient axial color correction to permit use of common optics for imaging all radiation in the 3 - 12 micrometer range.

It is a further object of the invention to provide a lens triplet with minimal color aberration such that all of the radiation in the 3 - 12 micrometer range may be focused upon a common detector array.

BRIEF DESCRIPTION OF THE DRAWINGS

The invention may best be understood by reference to the following detailed description when read in conjunction with the following drawing, wherein:

Figure 1 illustrates a wide band objective lens triplet according to the invention;

Figures 2A and 2B illustrate respectively, for a first formulation of the Figure 1 lens triplet, resulting on-axis tangential and sagittal ray fans;

Figure 3 illustrates an afocal lens system 10 based on another formulation of the Figure 1 triplet;

Figure 4 illustrates on-axis and off-axis tangential and sagittal ray fans for radiation passing through the system of Figure 3;

Figure 5 illustrates an imaging lens system incorporating the triplet of Figure 1 as the objective portion; and

Figure 6 illustrates on-axis and off-axis tangential and sagittal ray fans for radiation passing through the imaging system of Figure 5.

Certain preferred embodiments of the invention are disclosed herein. However, it should be appreciated that the specific materials, lens formulations and systems applications disclosed herein are merely illustrative and do not delimit the scope of the invention.

DESCRIPTION OF PREFERRED EMBODIMENTS

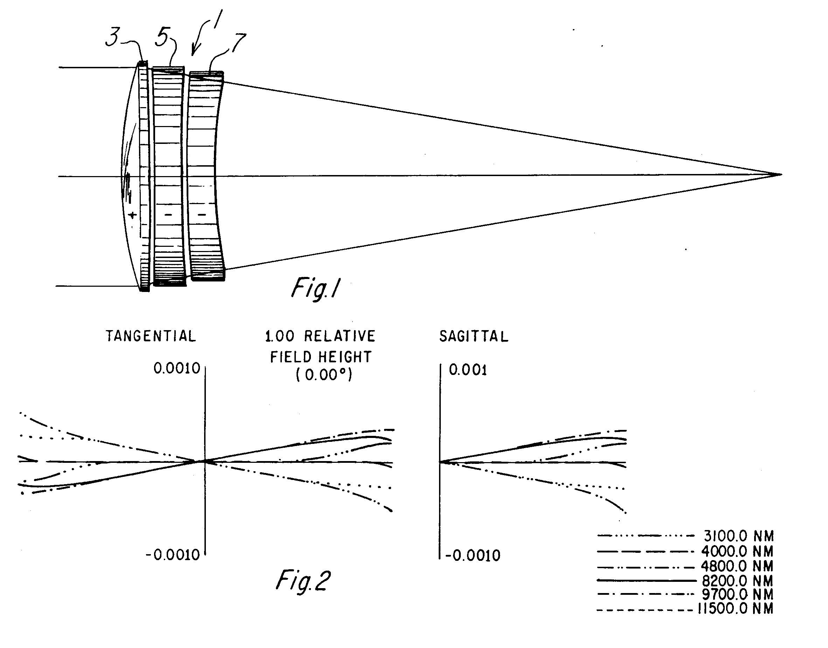

Figure 1 illustrates a wide band objective lens triplet 1 according to the invention comprising a lens 3 formed of chalcogenide glass, a lens 5, preferably formed of germanium, and a lens 7 preferably formed of a zinc chalcogenide, e.g., zinc selenide or zinc sulfide. In the preferred embodiments the first lens 3 is positive and the second and third lenses are negative. As further illustrated in Figure 1 collimated light impinging upon the triplet 1 is focused at an imaging plane 9 about which may be positioned a focal plane detector array such as the type used in a forward looking infrared imaging device.

A feature of the lens triplet 1 is that color correction throughout the entire 3 - 12 micrometer range, or the 3.5 - 13 micrometer range is sufficient to permit use of common optics for processing the incoming radiation. For example, radiation passing through the triplet 1 may be broken into two paths with a beam splitter such that radiation in the 3 - 5 micrometer atmospheric window can be received in a first focal plane for processing by a first detector array while radiation in the 8 - 12 micrometer atmospheric window can be received for processing by a second detector array in a second focal plane.

Moreover, in preferred embodiments of the invention the lens triplet 1 is formulated such that the resulting axial color correction is sufficient to permit imaging all of the radiation in the 3 - 12 micrometer range upon a common detector array. That is, axial color aberration does not have a dominant influence on the overall size of the image blurr when compared to other aberrations caused by the optical system. Alternately, the lens powers may be formulated to simultaneously focus all radiation in the 3.5 -13 micrometer range for imaging about a single focal plane.

The first lens 3 of the triplet 1 is formed of a material for which $40 < V < 46$, where

$$V = (N_D - 1)/(N_{13} - N_3),$$

$N_D$ is the refractive index at 8 micrometers; $N_{13}$ is the refractive index at 13 micrometers; and $N_3$ is the refractive index at 3 micrometers. The second lens 5 is germanium and the third lens 7 is a zinc chalcogenide.

In preferred embodiments the first lens 3 is a chalcogenide glass and the third lens is zinc sulfide or zinc selenide. The third lens 7 could also be a ternary composition comprising zinc, sulfur and selenium.

In a first exemplary formulation of the triplet 1, the first lens is formed of Texas Instruments 20 glass (TI-20) and the third lens 7 is formed of zinc selenide. TI-20 is a ternary glass composition according to the formula $Ge_{33}As_{12}Se_{55}$, also sold under the trade name AMTIR-1. In the 3 - 13 micrometer range

$$V_{(TI-20)} = (N_D - 1)/(N_{13} - N_3) = 44.6 .$$

According to the first formulation of the triplet 1, the first lens 3 is a positive element; the germanium lens 5 is a negative element having a power ranging from about 0.2 to about 0.3 that of the first lens 3; and the selenide lens 7 is a negative element having a power ranging from about 0.5 to 0.6 times that of the first lens 3. To form an on-axis objective the power of the germanium lens 5 is 0.24 that of the the first lens 3 and the power of the selenide lens 7 is 0.52 that of the first lens 3. The order of the lenses may be varied from that illustrated in Figure 1.

Based on the preferred lens powers of the first formulation Table 1 provides corresponding lens radii, thicknesses and lens separation distances for each lens surface. Surface numbers correspond to sequential numbering of the Figure 1 lens surfaces from left to right, i.e., referencing the outside surface of the first lens 3 as surface 1 and referencing the outside surface of lens 7 as surface 6. Surface 7 corresponds to the focal plane.

TABLE 1

| SURFACE NUMBER | RADIUS (INCHES) (mm x 25.4) | LENS THICKNESS (T) OR SEPARATION (S) (INCHES) (mm x 25.4) | LENS MATERIAL |
|---|---|---|---|
| 1 | 18.89064 | 0.550000 (T) | TI-20 |
| 2 | -13.66169 | .005000 (S) | |
| 3 | -13.28423 | 0.300000 (T) | GERMANIUM |
| 4 | -17.60111 | 0.005000 (S) | |
| 5 | -23.04041 | 0.250000 (T) | ZINC SELENIDE |
| 6 | 54.20512 | 20.499780 (S) | |
| 7 | --- | 0.000905 (T) | |

For this first formulation, Figures 2A and 2B illustrate, respectively, the resulting on-axis tangential and sagittal ray fans for transmitted radiation in the 3 - 12 micrometer wavelength region. Ray aberration for each wavelength is scaled in inches relative to the point of intersection of the chief ray in an image plane. The horizontal axis is a measure of radial distance along the aperture such that the most extreme point of each curve corresponds to the aberration of the marginal ray passing through the first lens 3. Because of symmetry only half of the sagittal ray fan is shown in Figure 2B. The ray fan for each wavelength is identifiable according to the legend, expressed in nanometers (NM), provided with the figure. It can be seen from Figure 2 that the amount of aberration is relatively small.

The first formulation may be modified by changing the ternary composition of the first lens 3 according to the general formula $Ge_XAs_YSe_Z$. In another variation of the triplet 1 better color correction is obtained by forming the third lens 7 with zinc sulfide. However, combinations which include a zinc sulfide lens may be less desirable because zinc sulfide is absorptive in the 10 - 12 micrometer region.

In a second exemplary formulation of the triplet 1, the first lens is a positive element formed of Texas Instruments 1173 glass (TI-1173); the second lens is a negative element formed of germanium and the third lens 7 is a negative element formed of zinc sulfide. TI-1173 is a ternary glass composition according to the formula $Ge_{28}Sb_{12}Se_{60}$ and is also sold under the trade name AMTIR-3. In the 3 - 13 micrometer range

$$V_{(TI-1173)} = (N_D - 1)/(N_{13} - N_3) = 43.$$

It is noted that the ternary composition of the first lens 3 may be varied according to the general formula $Ge_XAs_YSe_Z$ such as disclosed in U.S. Patent No. 3,360,649 which is herein incorporated by reference.

According to the second formulation the germanium lens 5 has a power ranging from about 0.40 to about 0.48 that of the first lens 3; and the sulfide lens 7 has a power ranging from about 0.18 to 0.26 times that of the first lens 3. For an on-axis objective the power of the germanium lens 5 is 0.44 that of the the first lens 3 and the power of the sulfide lens is 0.22 that of the first lens 3. The order of the lenses may be varied.

Based on the preferred lens powers Table 2 provides corresponding lens radii, thicknesses and lens separation distances for each lens surface in the second formulation. As noted with regard to Table 1, the surface numbers for the second formulation correspond to sequential numbering of the Figure 1 lens surfaces from left to right and surface 7 corresponds to the focal plane.

EP 0 317 363 B1

TABLE 2

| SURFACE NUMBER | RADIUS (INCHES) (mm x 25.4) | LENS THICKNESS (T) OR SEPARATION (S) (INCHES) (mm x 25.4) | LENS MATERIAL |
|---|---|---|---|
| 1 | 6.98495 | 0.500000 (T) | TI-1173 |
| 2 | -210.50744 | 0.100000 (S) | |
| 3 | -121.68706 | 0.500000 (T) | GERMANIUM |
| 4 | 34.79984 | 0.100000 (S) | |
| 5 | 24.60141 | 0.500000 (T) | ZINC SULFIDE |
| 6 | 10.65889 | 10.210867 (S) | |
| 7 | --- | -0.002418 (T) | |

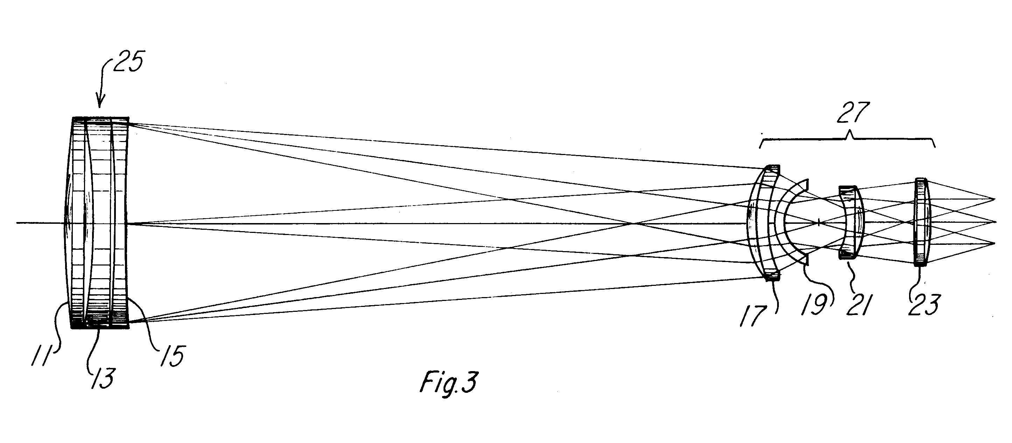

Figure 3 illustrates an afocal lens system 10 based on a variation of the second formulation of the triplet 1. In addition to the triplet 1 the system 10 includes a short focal length lens group 12 which provides lateral color correction. The power ratios of the triplet 1 differ from the preferred ratios of the second formulation in order to correct for axial aberrations introduced by the lens group 12.

The lens group 12 includes a positive lens 17 formed of TI-1173 glass followed by: a negative lens 19 formed of zinc sulfide; a second positive lens 21 formed of TI-1173 glass; and a third positive lens 23 formed of TI-1173 glass. The lens system 10 of Figure 3 is capable of receiving collimated radiation in the 3 - 12 micrometer region and transmitting the collimated radiation at a different magnification. The system 10 has a 101.6 mm (4 inch) aperture and a 7 degree field of view with a 4.5 power angular magnification.

Table 3 provides corresponding lens radii, thicknesses and lens separation distances for each lens surface in the system 10. Following the convention used in Tables 1 and 2 the surface numbers for the second formulation correspond to sequential numbering of the Figure 3 lens surfaces from left to right.

TABLE 3

| SURFACE NUMBER | RADIUS (INCHES) (mm x 25.4) | LENS THICKNESS (T) OR SEPARATION (S) (INCHES) (mm x 25.4) | LENS MATERIAL |
|---|---|---|---|
| 1 | 14.83253 | 0.550000 (T) | TI-1173 |
| 2 | -12.05140 | 0.005000 (S) | |
| 3 | -12.00515 | 0.400000 (T) | GERMANIUM |
| 4 | -22.67097 | 0.005000 (S) | |
| 5 | -35.97152 | 0.250000 (T) | ZINC SULFIDE |
| 6 | 51.47752 | 11.952458 (S) | |
| 7 | 1.71905 | 0.400000 (T) | TI-1173 |
| 8 | 2.30495 | 0.121132 (S) | |
| 9 | 0.83953 | 0.180000 (T) | ZINC SULFIDE |
| 10 | 0.66947 | 0.628459 (S) | |
| 11 | ---- | 0.588336 --- | |
| 12 | -1.07761 | 0.350000 (T) | TI-1173 |
| 13 | -1.30246 | 0.964540 (S) | |
| 14 | 10.84329 | 0.300000 (T) | TI-1173 |
| 15 | -4.64887 | 1.305078 (S) | |
| 16 | ---- | 1.333330 --- | |

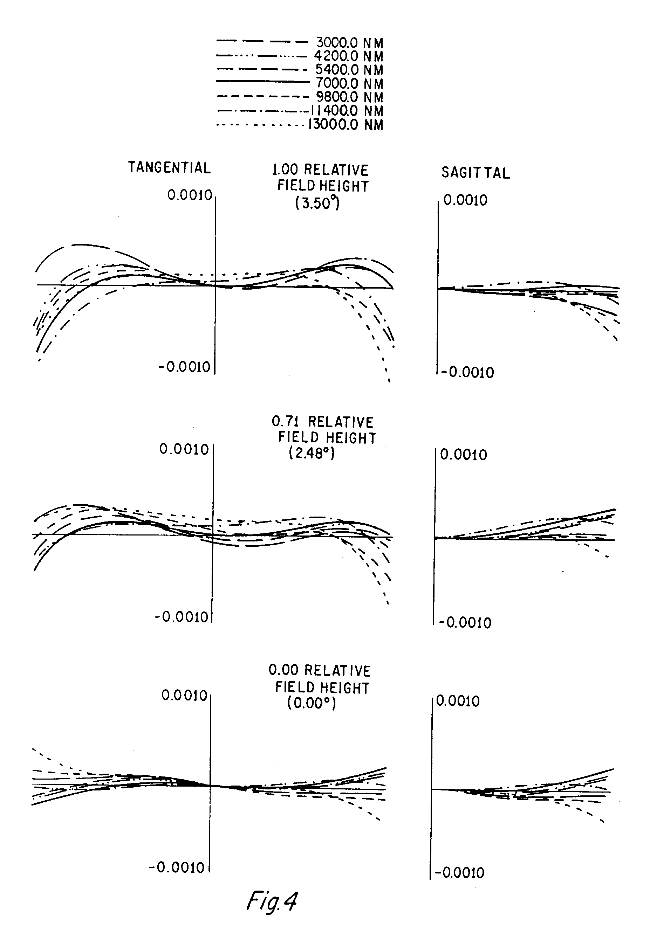

Following the convention of Figure 2, Figure 4 illustrates on-axis (0.00º) and off-axis (2.48º and 3.50º) tangential and sagittal ray fans for radiation in the 3 - 12 micrometer wavelength region passing through the system 10. Ray aberration for each wavelength is scaled in inches (mm x 25.4) relative to the point of intersection of the chief ray in an image plane. The ray fans of Figure 4 illustrate that resulting chromic aberrations are sufficiently small to permit use of the system 10 for all wavelengths in the 3 - 13 micrometer region.

5

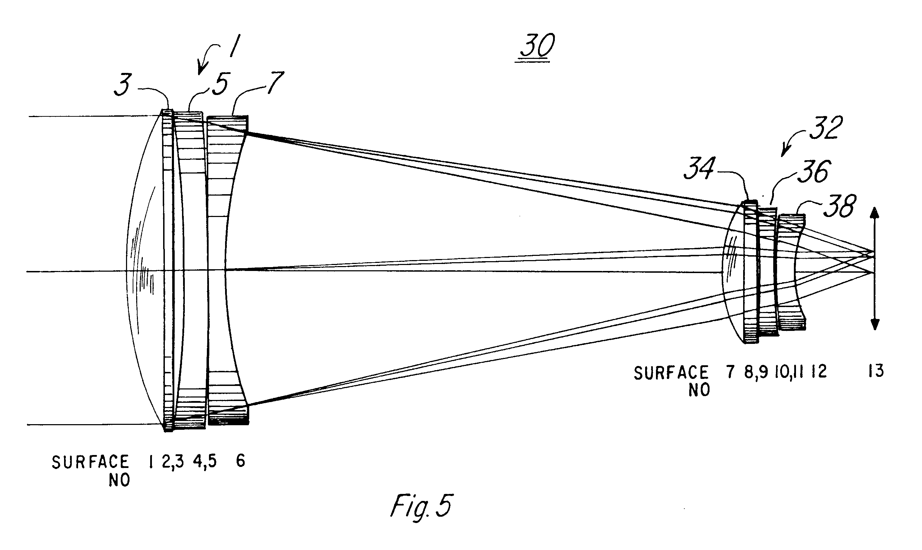

Figure 5 illustrates an f/1.5 imaging lens system 30 which utilizes the triplet 1 as the objective portion according to a variation off the first formulation. In this example, a second lens group 32, provided to correct for off-axis color aberrations, comprises three optical elements 34, 36 and 38, which also correspond to a variation of the first triplet formulation. The optical powers of the elements 3, 5 and 7 of the first triplet 1 differ from the preferred powers of the first formulation in order to correct for axial color aberrations introduced by the second lens group 32.

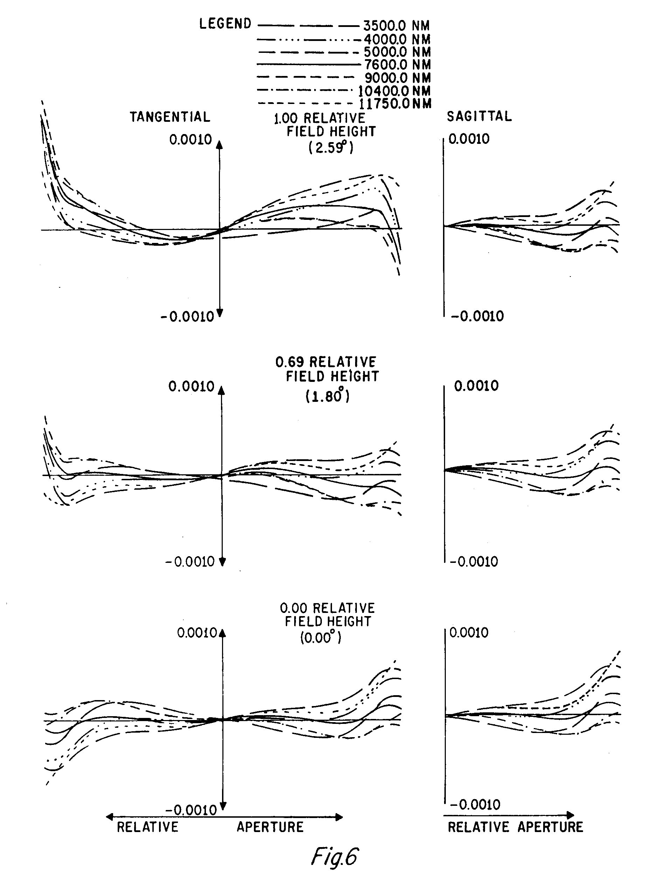

Table 4 provides corresponding lens radii, thicknesses and lens separation distances for each lens surface in the system 30 following the convention used in the preceding tables. In a manner similar to that provided in Figures 2 and 4, Figure 6 illustrates on-axis (0.00°) and off-axis (1.80° and 2.59°) tangential and sagittal ray fans for radiation in the 3 - 12 micrometer wavelength region passing through the system 30.

TABLE 4

| SURFACE NUMBER | RADIUS (INCHES) (mm x 25.4) | LENS THICKNESS (T) OR SEPARATION (S) (INCHES) (mm x 25.4) | LENS MATERIAL |
|---|---|---|---|
| 1 | 5.05853 | 0.700000 (T) | TI-20 |
| 2 | -18.18578 | 0.005000 (S) | |
| 3 | -17.72965 | 0.300000 (T) | GERMANIUM |
| 4 | -47.08812 | 0.005000 (S) | |
| 5 | -150.44950 | 0.250000 (T) | ZINC SELENIDE |
| 6 | 7.02696 | 6.402436 (S) | |
| 7 | 1.71684 | 0.450000 (T) | TI-20 |
| 8 | 64.01631 | 0.005000 (S) | |
| 9 | 134.70714 | 0.220000 (T) | GERMANIUM |
| 10 | 10.51597 | 0.010000 (S) | |
| 11 | 7.28467 | 0.220000 (T) | ZINC SELENIDE |
| 12 | 1.56868 | 1.030000 (S) | |
| 13 | ----- | -0.000656 | |

Certain preferred embodiments of the invention have been described. Various other arrangements and configurations of the disclosed embodiments and components thereof will be apparent when applying the triplet 1 to perform desired functions. Various parameters may be optimized to suit a desired purpose. For example, when the triplet is used in combination with a beam splitter to focus radiation in the 3 - 5 micrometer range about a different focal plane than the focal plane used for radiation in the 8 - 12 micrometer range, the lens powers may be varied to further improve color correction within one of these spectral regions. More generally, the color correction requirements are less strenuous when utilizing more than one focal plane. Accordingly, the scope of the invention is only to be limited by the claims which follow.

**Claims**

1. An optical system including an infrared refractive lens triplet having color correcting properties for radiation ranging from 3 to 13 micrometers, said triplet comprising:
   a first lens formed of glass with a dispersion V lying in the range 40 to 46,

   $$V = (N_D - 1)/(N_{13} - N_3),$$

   wherein for said first lens:
   $N_D$ is the refractive index at 8 micrometers,
   $N_{13}$ is the refractive index at 13 micrometers, and
   $N_3$ is the refractive index at 3 micrometers;
   a second lens comprising germanium; and
   a third lens formed of a chalcogenide of zinc, said triplet of lenses being capable of simultaneously focusing radiation in the 3 to 12 or 3,5 to 13 micrometer range in a single focal plane.

2. A system according to claim 1 characterized in that the third lens predominantly comprises zinc sulfide.

3. A system according to claim 1 characterized in that the third lens predominantly comprises zinc selenide.

4. A system according to claim 1 characterized in that the third lens comprises zinc sulfide and zinc selenide.

5. A system according to claim 1, 2, 3 or 4 characterized in that the first lens is formed of a chalcogenide glass.

6. A system according to any one of claims 1 to 5 characterized in that the second lens is essentially germanium.

7. A system according to any one of the preceding claims comprising:
   a first lens formed of a ternary composition according to the formula $Ge_X Sb_Y Se_Z$.

8. A system according to any one of preceding claims 1 to 6 comprising:
   a first lens formed of a ternary composition according to the formula $Ge_X As_Y Se_Z$.

9. A system according to claim 7 characterized in that the first lens is predominantly a ternary glass composition comprising germanium, antimony and selenium according to the formula $Ge_{28} Sb_{12} Se_{60}$.

10. A system according to claim 8 characterized in that the first lens is predominantly a ternary glass composition comprising germanium, arsenic and selenium according to the formula $Ge_{33} As_{12} Se_{55}$.

11. A system according to claim 1 characterized in that the first lens comprises $Ge_X Sb_Y Se_Z$ or $Ge_X As_Y Se_Z$; and the third lens comprises sulfides or selenides of zinc or combinations thereof.

12. A system according to claim 8 or claim 10 characterized in that the first lens is a positive element; the second lens is a negative element having a power between 0.2 and 0.3 of that of the first lens; and the third lens is a negative element having a power between 0.5 and 0.6 of that of the first lens.

13. A system according to claim 12 characterized in that the power of the second lens is 0.24 of that of the first lens and the power of the third lens is of 0.52 that of the first lens.

14. A system according to claim 7 or claim 9 characterized in that:
   the first lens is a positive element;
   the second lens is a negative element having a power between 0.40 and 0.48 of that of the first lens; and
   the third lens is a negative element having a power between 0.18 and 0.26 of that of the first lens.

15. A system according to claim 14 characterized in that the power of the second lens is 0.44 of that of the first lens and the power of the third lens is 0.22 of that of the first lens.

16. A system according to any one of the preceding claims characterized in that the triplet is ordered such that incoming radiation is first received by the first lens and last transmitted by the third lens.

17. A system according to any one of the preceding claims characterized by the inclusion of a second lens group arranged to provide lateral color correction to radiation transmitted by the triplet, the triplet and second lens group forming an afocal lens system.

18. A system according to claim 1 characterized by the inclusion of a second lens group arranged to provide lateral color correction to radiation transmitted by the triplet, the triplet and second lens group forming an afocal lens system, said system further characterized in that:
   the first lens is a positive element having V = 43;
   the second lens is a negative element having a power between 0.40 and 0.48 of that of the first lens; and
   the third lens is a negative element formed of zinc sulfide and having a power between 0.18 and 0.26 of that of the first lens; and

the second lens group comprises a positive lens having V = 43, a negative lens formed of zinc sulfide, a second positive lens having V = 43 and a third positive lens having V = 43.

**19.** A system according to claim 1 characterized by the inclusion of a second lens group arranged to correct for off axis color aberrations and wherein the first lens is a positive element having V = 44.6, the triplet and the second lens group forming an imaging lens system.

**Patentansprüche**

**1.** Optisches System mit einer Infrarotstrahlen brechenden Linsen-Dreiergruppe mit Farbkorrektureigenschaften für eine Strahlung im Bereich von 3 bis 13 $\mu$m, wobei die Dreiergruppe enthält:
eine erste Linse aus einem Glas mit einer Streuung V im Bereich von 40 bis 46,

$$V = (N_D - 1)/(N_{13} - N_3),$$

wobei für die erste Linse sind:
$N_D$ der Brechungsindex bei 8 $\mu$m,
$N_{13}$ der Brechungeindex bei 13 $\mu$m, und
$N_3$ der Brechungsindex bei 3 $\mu$m;
eine zweite Linse aus Germanium; und
eine dritte Linse aus einem Zink-Chalkogenid, wobei die Linsen-Dreiergruppe gleichzeitig eine Strahlung im Bereich von 3 bis 12 oder 3,5 bis 13 $\mu$m in einer einzigen Brennebene fokussieren kann.

**2.** System nach Anspruch 1, dadurch gekennzeichnet, daß die dritte Linse hauptsächlich Zinksulfid enthält.

**3.** System nach Anspruch 1, dadurch gekennzeichnet, daß die dritte Linse hauptsächlich Zinkselenid enthält.

**4.** System nach Anspruch 1, dadurch gekennzeichnet, daß die dritte Linse Zinksulfid und Zinkselenid enthält.

**5.** System nach Anspruch 1, 2, 3 oder 4, dadurch gekennzeichnet, daß die erste Linse aus einem Chalkogenid-Glas besteht.

**6.** System nach einem der Ansprüche 1 bis 5, dadurch gekennzeichnet, daß die zweite Linse im wesentlichen aus Germanium besteht.

**7.** System nach einem der vorhergehenden Ansprüche, enthaltend:
eine erste Linse aus einer ternären Zusammensetzung entsprechend der Formel $Ge_X Sb_Y Se_Z$.

**8.** System nach einem der Ansprüche 1 bis 6, enthaltend:
eine erste Linse aus einer ternären Zusammensetzung entsprechend der Formel $Ge_X As_Y Se_Z$.

**9.** System nach Anspruch 7, dadurch gekennzeichnet, daß die erste Linse hauptsächlich aus einer ternären Glaszusammensetzung enthaltend Germanium, Antimon und Selen gemäß der Formel $Ge_{28} Sb_{12} Se_{60}$ besteht.

**10.** System nach Anspruch 8, dadurch gekennzeichnet, daß die erste Linse hauptsächlich aus einer ternären Glaszusammensetzung enthaltend Germanium, Arsen und Selen gemäß der Formel $Ge_{33} As_{12} Se_{55}$ besteht.

**11.** System nach Anspruch 1, dadurch gekennzeichnet, daß die erste Linse $Ge_X Sb_Y Se_Z$ oder $Ge_X As_Y Se_Z$ enthält und daß die dritte Linse Zinksulfide oder Zinkselenide oder Kombinationen daraus enthält.

**12.** System nach Anspruch 8 oder 10, dadurch gekennzeichnet, daß die erste Linse ein positives Element ist, daß die zweite Linse ein negatives Element mit einer Vergrößerung zwischen 0,2 und 0,3 der der ersten Linse ist und daß die dritte Linse ein negatives Element mit einer Vergrößerung zwischen 0,5 und 0,6 der der ersten Linse ist.

13. System nach Anspruch 12, dadurch gekennzeichnet, daß die Vergrößerung der zweiten Linse 0,24 der der ersten Linse beträgt und die Vergrößerung der dritten Linse 0,52 der der ersten Linse beträgt.

14. System nach Anspruch 7 oder 9, dadurch gekennzeichnet, daß:
die erste Linse ein positives Element ist;
die zweite Linse ein negatives Element mit einer Vergrößerung zwischen 0,40 und 0,48 der der ersten Linse ist; und
die dritte Linse ein negatives Element mit einer Vergrößerung zwischen 0,18 und 0,26 der der ersten Linse ist.

15. System nach Anspruch 14, dadurch gekennzeichnet, daß die Vergrößerung der zweiten Linse 0,44 der der ersten Linse beträgt und die Vergrößerung der dritten Linse 0,22 der der ersten Linse beträgt.

16. System nach einem der vorhergehenden Ansprüche, dadurch gekennzeichnet, daß die Dreiergruppe so angeordnet ist, daß die ankommende Strahlung zuerst von der ersten Linse empfangen und zuletzt von der dritten Linse übertragen wird.

17. System nach einem der vorhergehenden Ansprüche, gekennzeichnet durch die Einfügung einer zweiten Linsengruppe, die so angeordnet ist, daß sie eine seitliche Farbkorrektur der von der Dreiergruppe übertragenen Strahlung bewirkt, wobei die Dreiergruppe und die zweite Linsengruppe ein afokales Linsensystem bilden.

18. System nach Anspruch 1, gekennzeichnet durch die Einfügung einer zweiten Linsengruppe, die so angeordnet ist, daß sie eine seitliche Farbkorrektur der von der Dreiergruppe übertragenen Strahlung ergibt, wobei die Dreiergruppe und die zweite Linsengruppe ein afokales Linsensystem bilden, wobei das System ferner dadurch gekennzeichnet ist, daß:
die erste Linse ein positives Element mit V = 43 ist;
die zweite Linse ein negatives Element mit einer Vergrößerung zwischen 0,40 und 0,48 der der ersten Linse ist; und
die dritte Linse ein negatives Element aus Zinksulfid mit einer Vergrößerung zwischen 0,18 und 0,26 der der ersten Linse ist; und
die zweite Linsengruppe eine positive Linse mit V = 43, eine negative Linse aus Zinksulfid, eine zweite positive Linse mit V = 43 und eine dritte positive Linse mit V = 43 enthält.

19. System nach Anspruch 1, gekennzeichnet durch die Einfügung einer zweiten Linsengruppe, die so angeordnet ist, daß sie von der Achse abweichende Farbaberrationen korrigiert, wobei die erste Linse ein positives Element mit V = 44,6 ist und die Dreiergruppe und die zweite Linsengruppe ein Abbildungslinsensystem bilden.

**Revendications**

1. Système optique comprenant un triplet de verres réfringents présentant des propriétés de correction de chromatisme pour des rayonnements de la gamme de 3 à 13 micromètres, ledit triplet comprenant :
   - un premier verre formé de verre présentant une dispersion V se trouvant dans la gamme de 40 à 46,

   $$V = (N_D - 1)/(N_{13} - N_3),$$

   dans lequel, pour ledit premier verre :
   $N_D$      est l'index de réfraction pour 8 micromètres,
   $N_{13}$      est l'index de réfraction pour 13 micromètres, et
   $N_3$      est l'index de réfraction pour 3 micromètres,
   - un second verre comprenant du germanium; et
   - un troisième verre formé d'un chalcogénure de zinc, ledit triplet de verres étant capable de focaliser simultanément des radiations dans la gamme de 3 à 12 ou de 3,5 à 13 micromètres dans un seul plan focal.

EP 0 317 363 B1

**2.** Système selon la revendication 1, caractérisé en ce que le troisième verre comprend, de manière prépondérante, du sulfure de zinc.

**3.** Système selon la revendication 1, caractérisé en ce que le troisième verre comprend, de manière prépondérante, du séléniure de zinc.

**4.** Système selon la revendication 1, caractérisé en ce que le troisième verre comprend du sulfure de zinc et du séléniure de zinc.

**5.** Système selon la revendication 1,2,3 ou 4, caractérisé en ce que le premier verre est formé d'un verre de chalcogénure.

**6.** Système selon l'une quelconque des revendications 1 à 5, caractérisé en ce que le second verre est essentiellement du germanium.

**7.** Système selon l'une quelconque des revendications précédentes, comprenant :
  - un premier verre formé d'une composition ternaire selon la formule $Ge_XSb_YSe_Z$.

**8.** Système selon l'une quelconque des revendications précédentes 1 à 6, comprenant :
  - un premier verre formé d'une composition ternaire selon la formule $Ge_XAs_YSe_Z$.

**9.** Système selon la revendication 7, caractérisé en ce que le premier verre est, de manière prépondérante, une composition de verre ternaire comprenant du germanium, de l'antimoine et du sélénium selon la formule $Ge_{28}Sb_{12}Se_{60}$.

**10.** Système selon la revendication 8, caractérisé en ce que le premier verre est, de manière prépondérante, une composition de verre ternaire comprenant du germanium, de l'arsenic et du sélénium selon la formule $Ge_{33}As_{12}Se_{55}$.

**11.** Système selon la revendication 1, caractérisé en ce que le premier verre comprend $Ge_XSb_YSe_Z$ ou $Ge_XAs_YSe_Z$ et en ce que le troisième verre comprend des sulfites ou des séléniures de zinc ou des combinaisons de ces corps.

**12.** Système selon la revendication 8 ou la revendication 10, caractérisé en ce que le premier verre est un élément convergent, le second verre est un élément divergent ayant une vergence comprise entre 0,2 et 0,3 fois celle du premier verre et le troisième verre est un élément divergent ayant une vergence comprise entre 0,5 et 0,6 fois celle du premier verre.

**13.** Système selon la revendication 12, caractérisé en ce que la vergence du second verre est 0,24 fois celle du premier verre et que la vergence du troisième verre est 0,52 fois celle du premier verre.

**14.** Système selon la revendication 7 ou la revendication 9, caractérisé en ce que :
  - le premier verre est un élément convergent;
  - le second verre est un élément divergent ayant une vergence comprise entre 0,40 et 0,48 fois celle du premier verre ; et
  - le troisième verre est un élément divergent ayant une vergence comprise entre 0,18 et 0,26 fois celle du premier verre.

**15.** Système selon la revendication 14, caractérisé en ce que la vergence du second verre est 0,44 fois celle du premier verre et que la vergence du troisième verre est de 0,22 fois celle du premier verre.

**16.** Système selon l'une quelconque des revendications précédentes, caractérisé en ce que le triplet est ordonné de telle manière que le rayonnement incident est reçu tout d'abord par le premier verre et transmis en dernier par le troisième verre.

**17.** Système selon l'une quelconque des revendications précédentes, caractérisé par l'inclusion d'un second groupe de verres disposé pour fournir une correction de chromatisme latérale au rayonnement transmis par le triplet, le triplet et le second groupe de verres formant un système afocal.

10

**18.** Système selon la revendication 1, caractérisé par l'inclusion d'un second groupe de verres disposé pour fournir une correction de chromatisme latérale au rayonnement transmis par le triplet, le triplet et le second groupe de verres formant un système afocal, ledit système étant en outre caractérisé en ce que :

- le premier verre est un élément convergent ayant V = 43 ;
- le second verre est un élément divergent ayant une vergence comprise entre 0,40 et 0,48 fois celle du premier verre ; et
- le troisième verre est un élément divergent formé de sulfure de zinc et présentant une vergence comprise entre 0,18 et 0,26 fois celle du premier verre; et
- le second groupe de verres comprend un verre convergent ayant V = 43, un verre divergent formé de sulfure de zinc, un second verre convergent ayant V = 43 et un troisième verre convergent ayant V = 43.

**19.** Système selon la revendication 1, caractérisé par l'inclusion d'un second groupe de verres disposé pour corriger des aberrations chromatiques de bord et dans laquelle le premier verre est un élément convergent ayant V = 44,6, le triplet et le second groupe de verres formant une combinaison optique apte à fournir des images.

*Fig.1*

SAGITTAL

0.001

-0.0010

1.00 RELATIVE
FIELD HEIGHT
(0.00°)

TANGENTIAL

0.0010

-0.0010

3100.0 NM
4000.0 NM
4800.0 NM
8200.0 NM
9700.0 NM
11500.0 NM

*Fig.2*

Fig.3

*Fig.4*

30

1

3 5 7

32

34 36

38

SURFACE   7  8,9  10,11  12        13
NO

SURFACE   1  2,3  4,5    6
NO

*Fig. 5*

Fig.6